# EUROPEAN PATENT APPLICATION

(11) **EP 4 660 551 A1**
(43) Date of publication of application: **10.12.2025**
(21) Application number: 25179556.3
(22) Date of filing: 28.05.2025
(51) Int. Cl.: F24F 13/02, F16L 25/14

(54) **AIR DISTRIBUTION BOX**

(30) Priority: 03.06.2024 IT 202400002365 U
(71) Applicant: Tecnosystemi S.p.A. Societá Benefit, 31029 Vittorio Veneto (TV) (IT)
(72) Inventor: RIGONI, Giorgio, 31015 CONEGLIANO TV (IT)
(74) Representative: Modiano, Micaela Nadia

(57) **Abstract**

Air distribution box (1), comprising a box-like body (2) which has a first opening (7) for access for at least one flexible pipe (8) for ducting the air flow, and a pair of plates (9a, 9b), opposite each other and able to slide with respect to the box-like body (2), each one comprising a flange (17a, 17b) for coupling to the flexible pipe (8);
the pair of plates (9a, 9b) comprises first means, hidden from view, for locking/release (14a, 14b, 14c, 14d) which interact with second means for temporary grip (15a, 15b, 15c, 15d) which are provided and partially hidden from view on the box-like body (2) for the activation at desired and distinct presettable positions of the pair of plates (9a, 9b) with respect to the box-like body (2).

Each one of the pair of plates (9a, 9b) is associated with a handle (16a, 16b) which can be gripped by the user.

## Description

The present invention relates to an air distribution box in ventilation systems, such as ducted Controlled Mechanical Ventilation, or CMV, systems.

The distribution box, also known as a "plenum" or "calm box", can be inserted in a space in a building that acts as a transition space for the air flow through dedicated pipes running through interspaces and/or false ceilings.

The "plenum" is an essential part of the ventilation system, because it can accommodate the grilles and distribute air inside the building.

Nowadays plenums are known for controlled mechanical ventilation, the function of which is to connect the ventilation pipes using suitable connectors which are adapted to accommodate flexible pipes from which the air-conditioning air flow originates.

Such conventional plenums are constituted by a box made of metal or of plastic material which is provided, on the sides, with one or more adapted collars or flanges, of variable diameter, for connection to a dedicated CMV pipe or tube.

The plant is completed by connecting the pipes to special calibration shut-off valves for vents, positionable on masonry or in plasterboard.

Perforated and L-shaped metal brackets are fixed externally to the box, and are adapted to enable the box to be attached to masonry or to plasterboard by means of adapted screws.

The conventional solutions have drawbacks which include the fact that the boxes, although structurally simple, require lengthy times for their correct installation inside spaces.

In the prior art in particular, it is not an easy matter to install the flexible pipe that connects ventilation units and plenums to the preset-size collars or flanges present on the air distribution box, as this requires great effort and lengthy times of the installation technicians.

Conventional flexible pipes are oval in shape and, by virtue of their elasticity and tendency to return to a circular shape, they are often difficult to install on collars or flanges of oval shape, precisely because of the difference in shape.

In fact, a conventional flexible pipe, whether insulated or otherwise, has a metal core embedded inside it which favors the tendency to return to a cylindrical shape.

An example of the prior art is given by Italian patent application MI2006A000353, filed on February 28, 2006, in which connection means are provided for stably connecting the calm box and the duct.

However, such connection means comprise clamping means which are laterally integral with the calm box and which comprise one or more elastic tabs, each one having a base associated with the box-like body or directly with the expansion, and each tab has a free end which can be mated with a special through hole provided on the expansion.

The air conveyance duct has corresponding through holes which are adapted to be superimposed on the through holes of the expansion, so that inserting the free end of an elastic tab into the respective hole prevents, by interference fit, uncoupling between the duct and the expansion.

This solution presents various drawbacks, such as the need to create holes both in the expansion and in the air conveyance duct, which requires time and increases setup costs, in addition to requiring the installation technician to spend time and exercise care in order to position the various holes in axial alignment with each other before being able to make the connection.

Furthermore, each free end of the elastic tabs has a pin which is shaped so that when it is inserted by force into the above-mentioned through hole, it is trapped and this prevents accidental extraction from the hole.

This prevents the installation technician from carrying out maintenance.

Pairs of flanges are also known, which are U-shaped in plan view and are freely associated telescopically with each other in order to allow an initial adaptation to the size of the pipe.

These solutions too have drawbacks: in fact, once the positioning of the flanges as a function of the size of the connecting pipe has been determined, it is found that the flanges, being free, are subject to changes in position, and therefore to being moved closer together by the elasticity of the connecting pipe that is being installed, which modifies, i.e. worsens, the correct flow of air and also renders the connection unstable.

Boxes are also known wherein the position of the flanges is adjustable by way of an exposed toothed rack which is provided laterally to the flanges and which interacts with a slip-clutch tooth, also exposed to view, arranged in a special seat provided laterally to and integrally with the box-like body.

This solution too has drawbacks: in fact the exposed arrangement of the tooth and of the entire toothed rack exposes them to possible malfunctions owing to deposits of dust or dirt thereon.

Furthermore, implementing the known solution entails high additional costs, as the seat needs to be provided on the body of the box for the slip-clutch tooth, which then needs to be coupled to that seat by means of special pins accommodated inside complementarily-shaped accommodations to be provided in the seat, and these pins are subject to breakage during their installation and/or use.

The aim of the present application is to resolve the abovementioned technical problems, eliminating the drawbacks in the cited known art, by providing an air distribution box that makes it possible to achieve a rapid and easy installation of a flexible pipe, so reducing the installation times and the work required of the installation technician to carry it out.

Within the above aim, an object of the invention is to provide an air distribution box that enables, at the same time, a rapid and easy removal of flexible pipes from the box for the purposes of maintenance or substitution.

Another object of the invention is to provide an air distribution box that maintains the correct arrangement of the piping over time, for optimization of the air flow.

Another object of the invention is to provide an air distribution box that, in addition to the foregoing characteristics, also adds that of enabling the installation technician to perform an easy and rapid alignment of the plenum without needing specific additional equipment.

Another object of the invention is to provide an air distribution box that, in addition to the foregoing characteristics, also adds that of preventing the accidental extraction of the flexible pipe from the box.

Another object of the invention is to provide an air distribution box that, in addition to the foregoing characteristics, also adds that of simplifying the installation process and enabling greater precision, so reducing errors during the installation phase to the minimum.

Not least an object is to provide an air distribution box that is structurally simple, has a low number of components, is rapid and easy to assemble and maintain, and can be provided with the usual and conventional machinery and plants.

This aim and these and other objects which will become more apparent hereinafter are achieved by an air distribution box, comprising a box-like body which has a first opening for access for at least one flexible pipe for ducting the air flow, and a pair of plates, opposite each other and able to slide with respect to said box-like body, each one comprising a flange for coupling to said flexible pipe, characterized in that said pair of plates comprises first means, hidden from view, for locking/release which interact with second means for temporary grip which are provided and partially hidden from view on said box-like body for the activation at desired and distinct presettable positions of said pair of plates with respect to said box-like body, each one of said pair of plates being associated with a handle which can be gripped by the user.

Further characteristics and advantages of the invention will become more apparent from the detailed description of a particular, but not exclusive, embodiment, illustrated by way of non-limiting example in the accompanying drawings wherein:

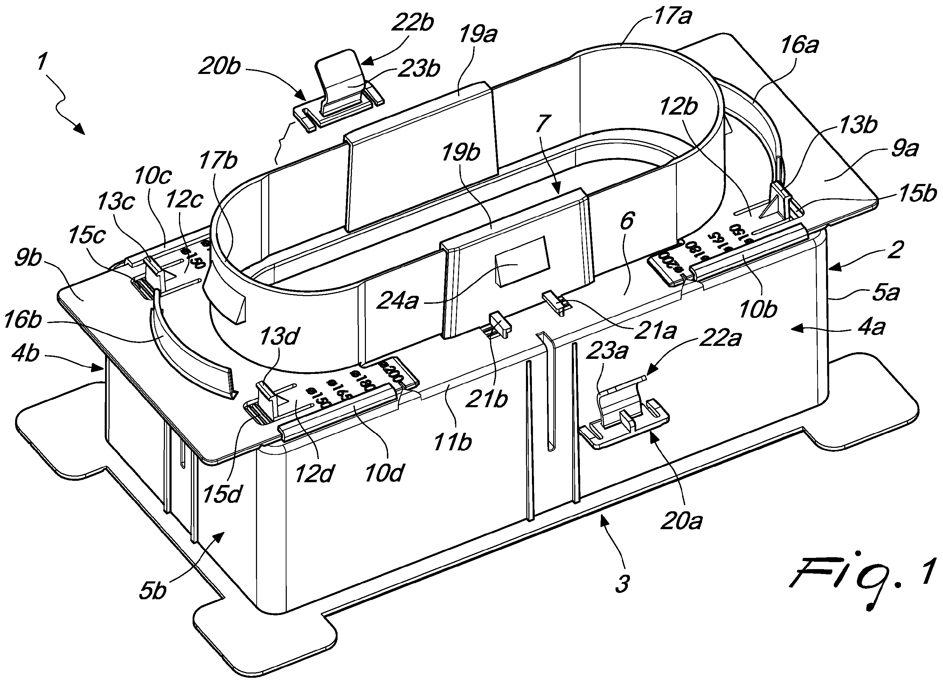

Figure 1 is a partially exploded perspective view of the air distribution box according to the invention in a first configuration;
Figure 2 is a perspective view of the air distribution box according to the invention, associated with a flexible pipe;

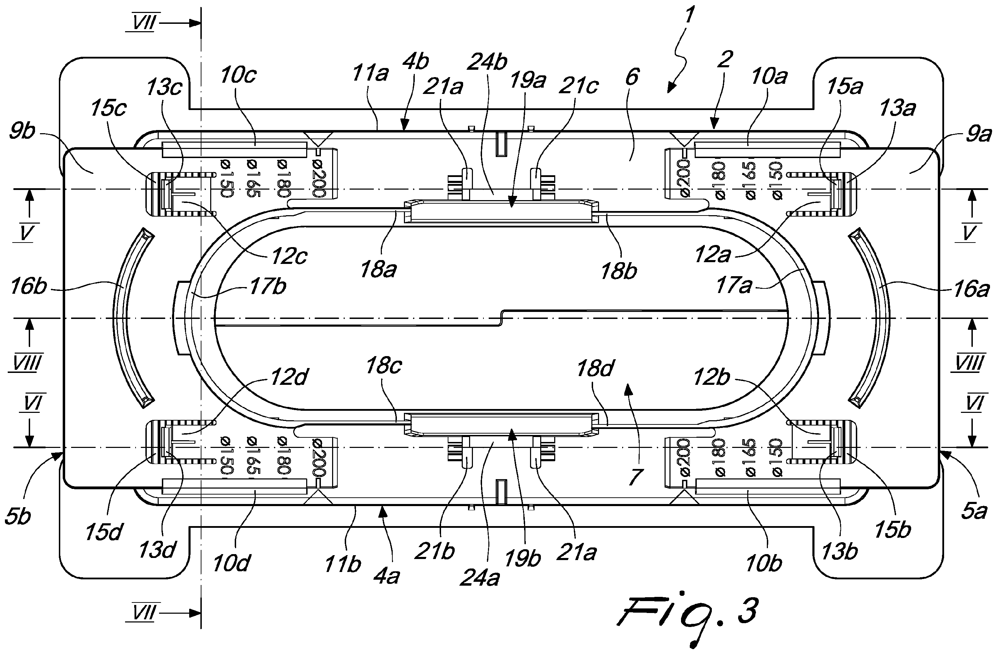

Figure 3 is a view from above of the air distribution box according to the invention of Figure 1;

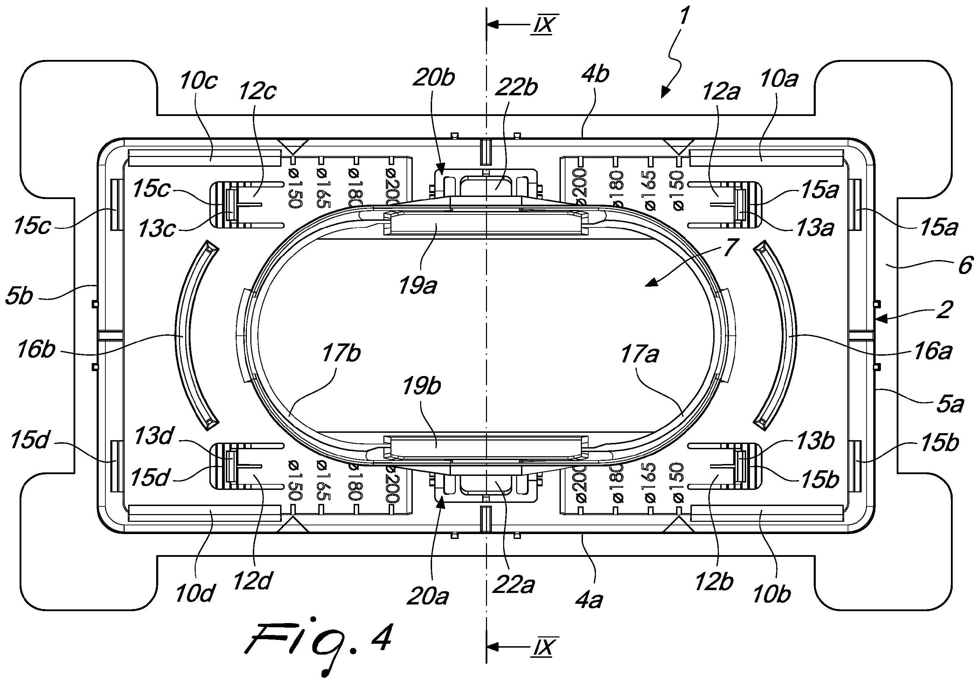

Figure 4 is a view from above of the air distribution box according to the invention of Figure 2;

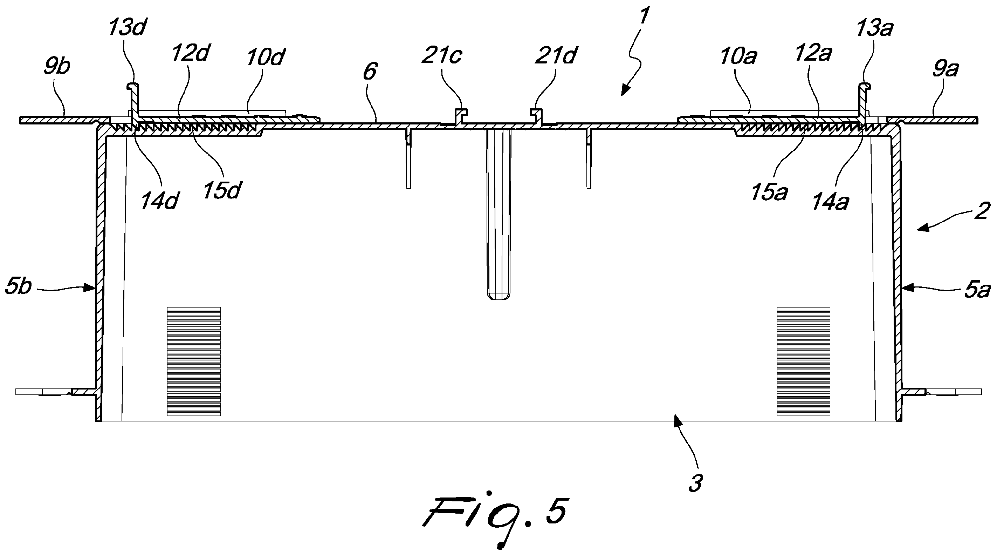

Figure 5 is a cross-sectional view of the air distribution box according to the invention taken along the line V-V of Figure 3 in the condition in which the plates are locked;

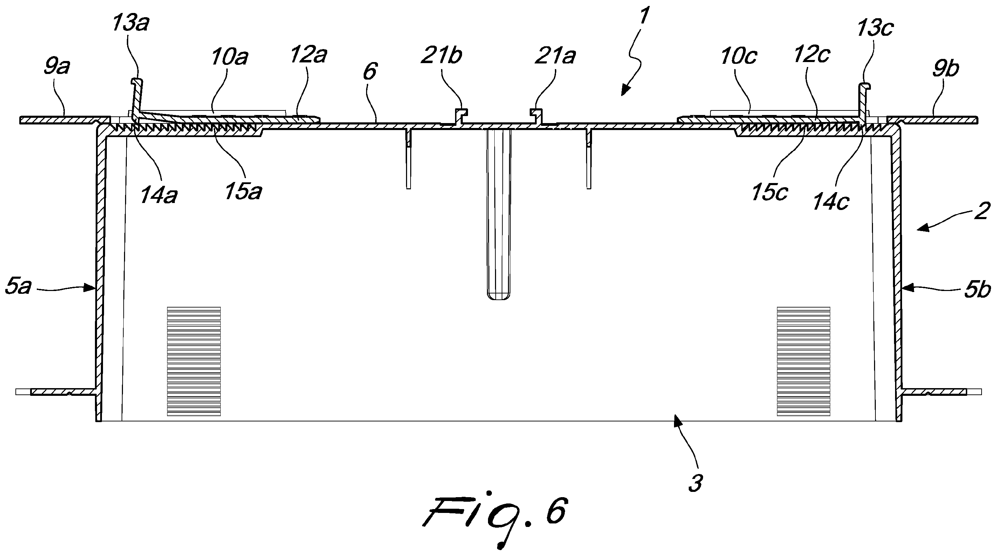

Figure 6 is a view of the invention similar to the previous figure, taken along the line VI-VI of Figure 3 in the condition in which one of the plates is released;

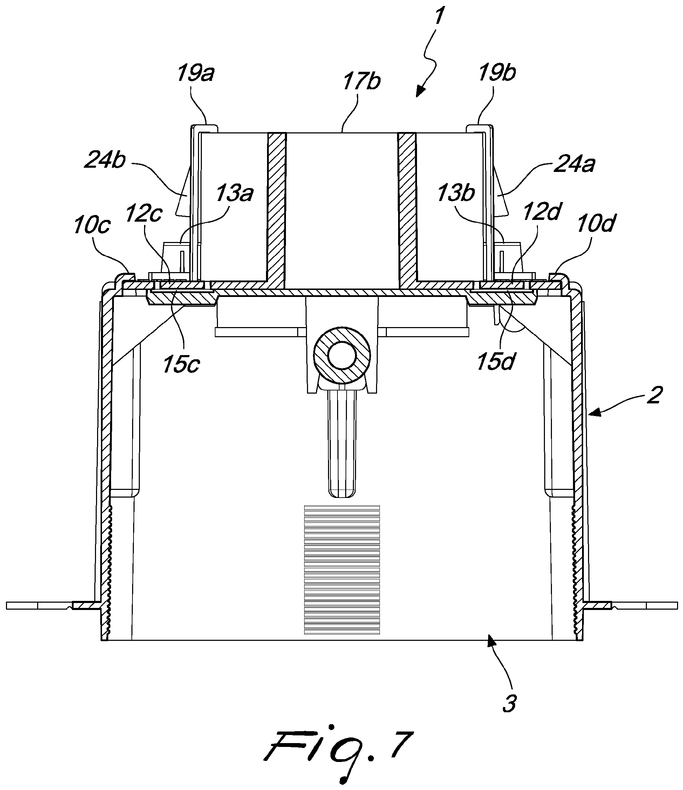

Figure 7 is a cross-sectional view of the air distribution box according to the invention taken along the line VII-VII in Figure 3;

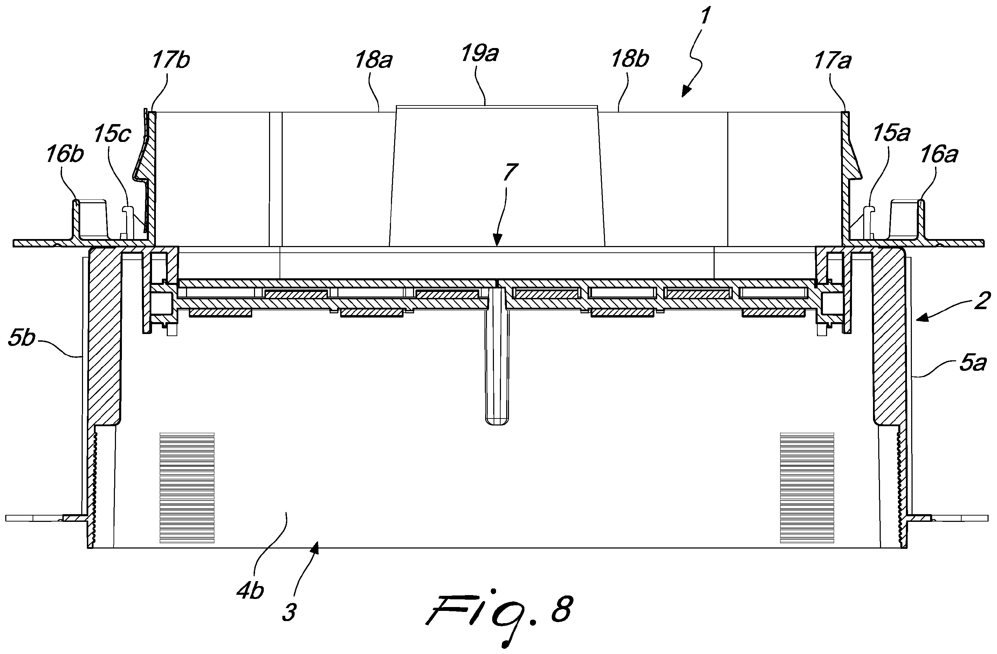

Figure 8 is a cross-sectional view of the air distribution box according to the invention taken along the line VIII-VIII in Figure 3;

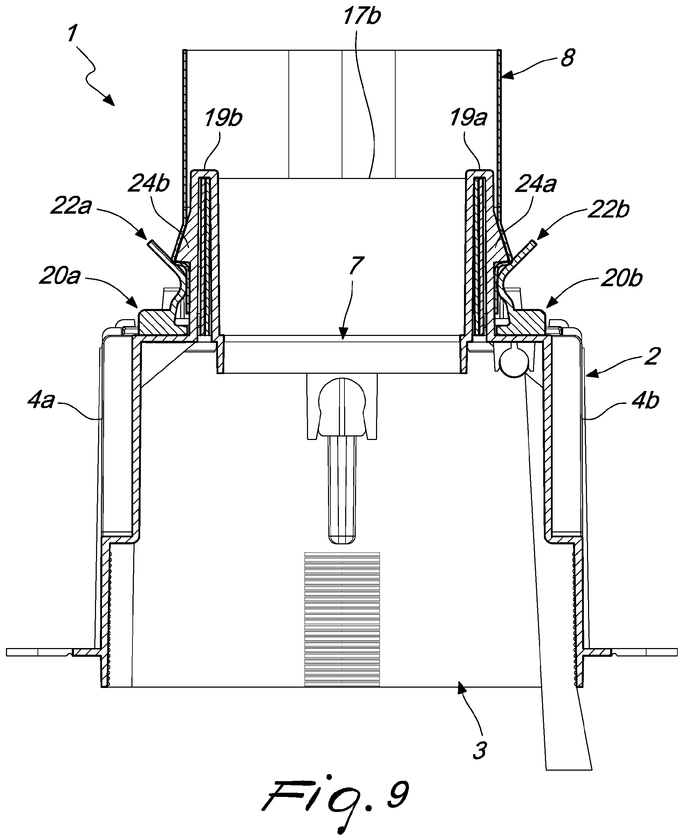

Figure 9 is a cross-sectional view of the air distribution box according to the invention taken along the line IX-IX of Figure 4;

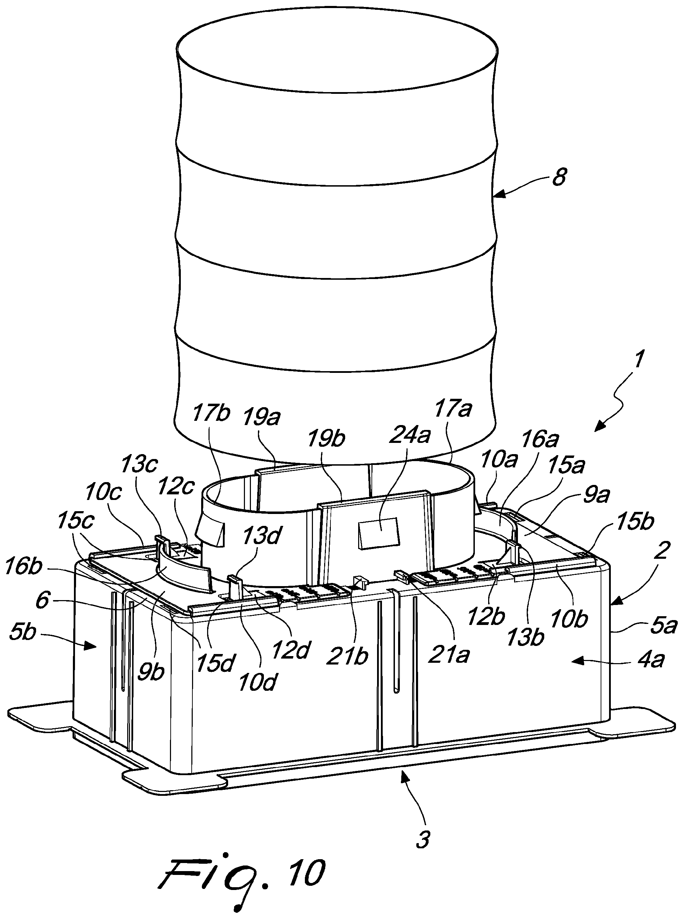

Figure 10 is a perspective view of the air distribution box according to the invention with the flexible pipe at the insertion stage;

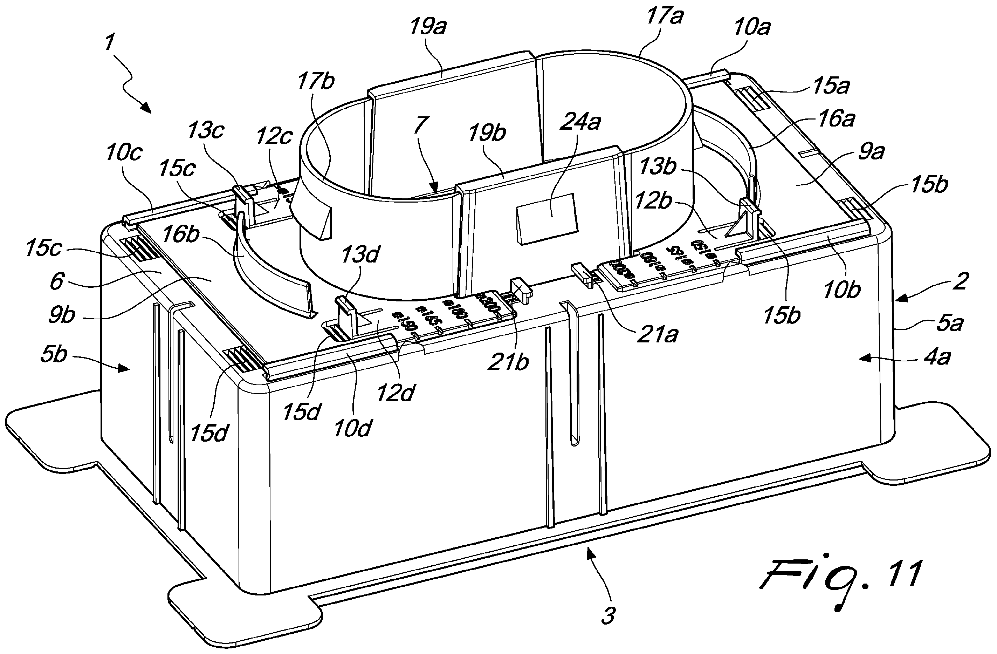

Figure 11 is a perspective view of the air distribution box according to the invention in a second configuration;

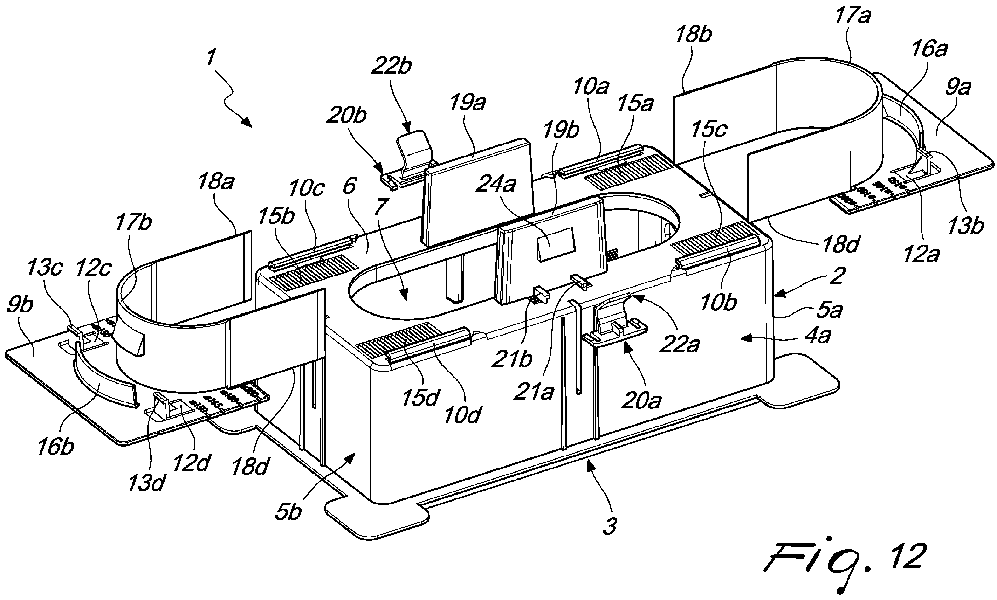

Figure 12 is an exploded view of the air distribution box according to the invention.

In the embodiments illustrated, individual characteristics shown in relation to specific examples may in reality be interchanged with other, different characteristics, existing in other embodiments.

With reference to the figures, the reference numeral 1 generally designates an air distribution box, particularly for ducted mechanical ventilation systems, also known as CMV.

The box 1 is constituted by a box-like body 2 having a substantially parallelepiped shape so as to define an open bottom 3, two longitudinal side walls 4a, 4b, two transverse side walls 5a, 5b and a top wall 6 which in plan view has a rectangular shape.

On the top wall 6 of the box-like body 2, a first opening 7 for access, preferably elliptical in plan view, is provided for at least one flexible pipe 8 for ducting the air flow.

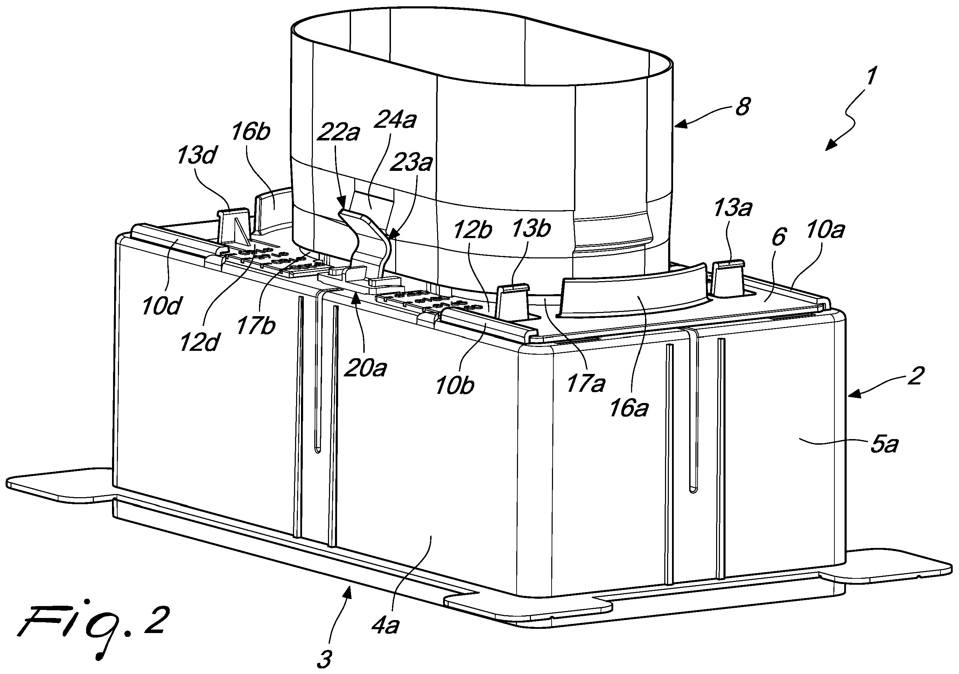

A pair of plates 9a, 9b is slideably associated, adjustably, on the top wall 6 of the box-like body 2, and in plan view the plates are substantially rectangular with width and length smaller than that of the top wall 6 and with their mutually facing ends, when deployed, preferably curved like the shape of the underlying first opening 7, as shown in Figure 2.

The plates 9a, 9b are arranged opposite each other and their longitudinal edges are slideably associated with pairs of first rails or guides 10a, 10b, 10c, 10d, which are L-shaped in cross-section, each guide of each pair being arranged opposite the other guide.

The pairs of first guides 10a, 10b, 10c, 10d protrude from the longitudinal edges 11a, 11b of the box-like body 2 proximately to its longitudinal ends.

The pair of plates 9a, 9b is slideably associated with the top wall 6 of the box-like body 2 in such a way that it can be adjusted in various presettable positions, pairs of first tabs 12a, 12b, 12c, 12d, being provided, in the zones adjacent to the pairs of first guides 10a, 10b, 10c, 10d, which are elastically deformable and therefore can be lifted temporarily and partially from the plane of arrangement of the pair of plates 9a, 9b.

From the free terminal end of each one of the pairs of first tabs 12a, 12b, 12c, 12d that is directed toward the transverse walls 5a, 5b of the box-like body 2, a projection 13a, 13b, 13c, 13d protrudes upward which can be gripped by the user and is adapted to allow the temporary lifting of the pairs of first tabs 12a, 12b, 12c, 12d.

At the opposite end from the projections 13a, 13b, 13c, 13d, first means for locking/release protrude in an internal, and therefore hidden from view, zone of the box-like body 2, and are constituted by at least one tooth 14a, 14b, 14c, 14d which is therefore hidden from view and is adapted to interact selectively with second means for temporary grip constituted by at least one of several complementarily-shaped teeth of a rack 15a, 15b, 15c, 15d which is provided and partially hidden from view, when deployed, at, and longitudinally with respect to, the underlying top wall 6.

The presence of the pairs of first tabs 12a, 12b, 12c, 12d, which can be lifted temporarily by the user by gripping the projections 13a, 13b, 13c, 13d, as well as the teeth 14a, 14b, 14c, 14d hidden from view and the racks 15a, 15b, 15c, 15d partially hidden from view, make it possible to safely and adjustably associate, in desired and distinct and presettable positions, the pair of plates 9a, 9b with respect to the, underlying, top wall 6 of the box-like body 2.

The primary function of the shape and deployment of the pairs of first tabs 12a, 12b, 12c, 12d is to protect the teeth 14a, 14b, 14c, 14d and the racks 15a, 15b, 15c, 15d from dust and dirt as well as to ensure that, after the plates 9a, 9b have been moved apart, there will be no return to their original position once the flexible pipe 8 is coupled (as described below), owing to the elasticity of the flexible pipe itself.

The pairs of first tabs 12a, 12b, 12c, 12d are furthermore structurally simple and strong, their shape making it possible to keep down the number of components used.

Each one of the pair of plates 9a, 9b is associated, proximate to the end that does not face the other plate, with a handle 16a, 16b which protrudes upward and which preferably has a curved shape so as to be easily gripped by the user.

From each one of the pair of plates 9a, 9b, a flange 17a, 17b for connection to said flexible pipe 8 furthermore protrudes, by a desired height and in a zone adjacent to each one of the handles 16a, 16b, said flange in plan view being shaped like a letter U lying on its side so as to define a pair of free ends 18a, 18b, 18c, 18d which, when deployed, face each other and lie on mutually offset planes and are partially accommodatable by sliding into a pair of hollow shoulders 19a, 19b which protrude from the top wall 6.

The box 1 comprises third means slideably and transversely associated with the top wall 6 of the box-like body 2, which are adapted for the temporary locking by interference fit of the at least one flexible pipe 8, said third means comprising two flat sliders 20a, 20b which are slideably associated with adapted pairs of second guides 21a, 21b, 21c, 21d which are L-shaped and protrude opposite each other from the top wall 6 in a preferably central zone outside the hollow shoulders 19a, 19b.

A V-shaped second tab 22a, 20b protrudes upward from each flat slider 20a, 22b, the vertex 23a, 23b of the V being arranged, when deployed, below a dovetail-shaped protuberance 24a, 24b which protrudes laterally from the hollow shoulders 19a, 19b so as to define the temporary locking by interference fit of the at least one flexible pipe 8 positionable between the second tab 22a, 22b and the protuberances 24a, 24b.

Thus it has been found that the invention fully achieves the intended aim and objects, an air distribution box being obtained that enables the installation technician to achieve a rapid and easy installation of a flexible pipe, so reducing the installation times and the work required of the installation technician to carry it out, and at the same time enabling a rapid and easy removal of the flexible pipes from the box for the purposes of maintenance or substitution.

The box 1 also enables the installation technician to achieve an easy and rapid alignment of the flexible pipe 8 without needing special additional equipment, it being sufficient to act on the handles 16a, 16b to maintain over time the correct arrangement of the flexible pipe 8 for an optimization of the air flow, by virtue of the presence of the first means, partially hidden from view, for locking/release 14a, 14b, 14c, 14d and of the second means for temporary grip 15a, 15b, 15c, 15d.

The third means furthermore make it possible to prevent the accidental extraction of the flexible pipe from the box.

Finally the box is structurally simple, has a low number of components, and is rapid and easy to assemble and maintain.

Naturally the materials used as well as the dimensions of the individual components of the invention may be more relevant according to specific requirements.

The characteristics indicated above as advantageous, convenient or the like, may also be missing or be substituted by equivalent characteristics.

The disclosures in Italian Utility Model Application No. 202024000002365 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An air distribution box (1), comprising a box-like body (2) which has a first opening (7) for access for at least one flexible pipe (8) for ducting the air flow, and a pair of plates (9a, 9b), opposite each other and able to slide with respect to said box-like body (2), each one comprising a flange (17a, 17b) for coupling to said flexible pipe (8), **characterized in that** said pair of plates (9a, 9b) comprises first means, hidden from view, for locking/release (14a, 14b, 14c, 14d) which interact with second means for temporary grip (15a, 15b, 15c, 15d) which are provided and partially hidden from view on said box-like body (2) for the activation at desired and distinct presettable positions of said pair of plates (9a, 9b) with respect to said box-like body (2), each one of said pair of plates (9a, 9b) being associated with a handle (16a, 16b) which can be gripped by the user.

2. The box (1) according to claim 1, comprising a box-like body (2) having a substantially parallelepiped shape so as to define an open bottom (3), two longitudinal side walls (4a, 4b), two transverse side walls (5a, 5b) and a top wall (6), which in plan view has a rectangular shape on which a first opening (7) for access is provided for at least one flexible pipe (8) for ducting the air flow, **characterized in that** a pair of plates (9a, 9b) is slideably associated, adjustably, on said top wall (6) of said box-like body (2), and in plan view said plates are substantially rectangular with width and length smaller than that of said top wall (6) and with their mutually facing ends, when deployed, substantially having the shape of said, underlying, first opening (7), said pair of plates (9a, 9b) being arranged opposite each other and their longitudinal edges being slideably associated with pairs of first rails or guides (10a, 10b, 10c, 10d), which are L-shaped in cross-section, each guide of each one of said pairs of first guides (10a, 10b, 10c, 10d) being arranged opposite the other guide.

3. The air distribution box (1) according to one or more of the preceding claims, **characterized in that** said pairs of first guides (10a, 10b, 10c, 10d) protrude from the longitudinal edges (11a, 11b) of said box-like body (2) proximate to its longitudinal ends.

4. The air distribution box (1) according to one or more of the preceding claims, **characterized in that** said pair of plates (9a, 9b) is slideably associated with said top wall (6) of said box-like body (2) in such a way that it can be adjusted in various presettable positions, pairs of first tabs (12a, 12b, 12c, 12d) being provided, in the zones adjacent to said pairs of first guides (10a, 10b, 10c, 10d), which are elastically deformable and therefore can be lifted temporarily and partially from the plane of arrangement of said pair of plates (9a, 9b).

5. The air distribution box (1) according to one or more of the preceding claims, **characterized in that**, from the free terminal end of each one of said pairs of first tabs (12a, 12b, 12c, 12d) that is directed toward said transverse walls (5a, 5b) of said box-like body (2), a projection (13a, 13b, 13c, 13d) protrudes upward which can be gripped by the user and is adapted to allow the temporary lifting of said pairs of first tabs (12a, 12b, 12c, 12d).

6. The air distribution box (1) according to one or more of the preceding claims, **characterized in that**, at the opposite end from said projections (13a, 13b, 13c, 13d), first means for locking/release protrude in an internal, and therefore hidden from view, zone of said box-like body (2), and are constituted by at least one tooth (14a, 14b, 14c, 14d) which is therefore hidden from view and is adapted to interact selectively with second means for temporary grip constituted by at least one of several complementarily-shaped teeth of a rack (15a, 15b, 15c, 15d) which is provided and partially hidden from view, when deployed, at, and longitudinally with respect to, said underlying top wall (6).

7. The air distribution box (1) according to one or more of the preceding claims, **characterized in that** said pairs of first tabs (12a, 12b, 12c, 12d), which can be lifted temporarily by the user by gripping the projections (13a, 13b, 13c, 13d), as well as said teeth (14a, 14b, 14c, 14d) hidden from view and said racks (15a, 15b, 15c, 15d) partially hidden from view, make it possible to safely and adjustably associate, in desired and distinct and presettable positions, said pair of plates (9a, 9b) with respect to said, underlying, top wall (6) of said box-like body (2).

8. The air distribution box (1) according to one or more of the preceding claims, **characterized in that** the primary function of the shape and deployment of said pairs of first tabs (12a, 12b, 12c, 12d) is to protect said teeth (14a, 14b, 14c, 14d) and said racks (15a, 15b, 15c, 15d) from dust and dirt as well as to ensure that, after said plates (9a, 9b) have been moved apart, there will be no return to their original position once said flexible pipe (8) is coupled, owing to the elasticity of said flexible pipe (8) itself.

9. The air distribution box (1) according to one or more of the preceding claims, **characterized in that** each one of said pair of plates (9a, 9b) is associated, proximately to the end that does not face the other plate, with a handle (16a, 16b) which protrudes upward and which has an ergonomic shape in order to be easily gripped by the user.

10. The air distribution box (1) according to one or more of the preceding claims, **characterized in that** from each one of said pair of plates (9a, 9b) a flange (17a, 17b) for connection to said flexible pipe (8) protrudes, by a desired height and in a zone adjacent to each one of said handles (16a, 16b), said flange in plan view being shaped like a letter U lying on its side so as to define a pair of free ends (18a, 18b, 18c, 18d) which, when deployed, face each other and lie on mutually offset planes and are partially accommodatable by sliding into a pair of hollow shoulders (19a, 19b) which protrude from said top wall (6).

11. The air distribution box (1) according to one or more of the preceding claims, **characterized in that** it comprises third means slideably and transversely associated with said top wall (6) of said box-like body (2), which are adapted for the temporary locking by interference fit of said at least one flexible pipe (8), said third means comprising two flat sliders (20a, 20b) which are slideably associated with adapted pairs of second guides (21a, 21b, 21c, 21d) which are L-shaped and protrude opposite each other from said top wall (6) in a substantially central zone outside said hollow shoulders (19a, 19b).

12. The air distribution box (1) according to one or more of the preceding claims, **characterized in that** a V-shaped second tab (22a, 22b) protrudes upward from each one of said flat sliders (20a, 20b), the vertex (23a, 23b) of the V being arranged, when deployed, below a dovetail-shaped protuberance (24a, 24b) which protrudes laterally from said hollow shoulders (19a, 19b) so as to define the temporary locking by interference fit of said at least one flexible pipe (8) positionable between said second tab (22a, 22b) and said protuberances (24a, 24b).
